Europäisches Patentamt

European Patent Office

Office européen des brevets

(19)

(11) **EP 0 588 701 B1**

(12) **FASCICULE DE BREVET EUROPEEN**

(45) Date de publication et mention de la délivrance du brevet:
**01.07.1998   Bulletin 1998/27**

(51) Int Cl.⁶: **H04J 15/00**, H04L 5/02

(21) Numéro de dépôt: **93402218.7**

(22) Date de dépôt: **13.09.1993**

(54) **Procédé et dispositifs pour la transmission simultanée de deux signaux binaires hétérochrones par un même support**

Anordnung und Verfahren für gleichzeitige Übertragung von zwei digitalen heterochronen Signalen über dieselbe Übertragungsstrecke

Method and device for simultaneous transmission of two heterochronous digital signals via the same link

(84) Etats contractants désignés:
**AT BE CH DE ES FR GB IT LI NL SE**

(30) Priorité: **15.09.1992  FR 9210968**

(43) Date de publication de la demande:
**23.03.1994   Bulletin 1994/12**

(73) Titulaire: **ALCATEL ALSTHOM COMPAGNIE GENERALE D'ELECTRICITE**
**75008 Paris (FR)**

(72) Inventeurs:
• **Guerin, Jean-Pierre**
  **F-22660 Trelevern (FR)**
• **Robin, Jean-Francois**
  **F-22810 Belle-Isle-en-Terre (FR)**
• **Roudot, François**
  **F-22560 Pleumeur-Bodou (FR)**

(74) Mandataire: **Schaub, Bernard et al**
**c/o ALCATEL ALSTHOM,**
**Département de Propriété Industrielle,**
**30, avenue Kléber**
**75116 Paris (FR)**

(56) Documents cités:
**DE-A- 3 522 132**

• **PATENT ABSTRACTS OF JAPAN vol. 8, no. 84 (E-239)18 Avril 1984 & JP-A-59 005 739 (NIPPON DENKI K.K.)**
• **PATENT ABSTRACTS OF JAPAN vol. 8, no. 131 (E-251)19 Juin 1984 & JP-A-59 040 735 (YOKOGAWA HOKUSHIN DENKI K.K.)**

**Description**

L'invention concerne un procédé et des dispositifs destinés à permettre la transmission simultanée de deux signaux binaires hétérochrones par l'intermédiaire d'un même support physique.

Le document DE-A-3522132 propose une première solution à ce problème qui est proposée pour une liaison optique. Il y est prévu une transmission simultanée de signaux par l'intermédiaire d'un train de données large bande qui est modulé en phase par un train de données à bande étroite. Un signal de modulation numérique est produit à partir des données en bande étroite, avec une demi-largeur de bande effective correspondant à la période d'horloge de bits du signal large bande.

Une solution alternative à ce problème est fournie par la présente demande.

Un document JP-A-59005739 décrit un dispositif comportant des circuits retardateurs exploités pour améliorer la prise en compte de deux signaux d'entrée lorsque ces signaux sont pratiquement en phase.

Par ailleurs un procédé usuel de transmission de signaux, notamment binaires, par l'intermédiaire d'un support donné, implique la mise en oeuvre d'une horloge d'échantillonnage dont la fréquence est choisie nettement supérieure à la fréquence maximale envisagée pour le ou les signaux transmis.

Ce procédé usuel implique un multiplexage des échantillonnages réalisés sur les signaux et le pilotage d'une base de temps chargée de fournir, côté émission, des motifs de synchronisation destinés à être exploités pour le démultiplexage, côté réception.

Ce procédé connu qui convient bien pour de nombreuses applications, en particulier si la technologie mise en oeuvre est de type CMOS, est par contre susceptible d'être technologiquement et économiquement inacceptable pour d'autres applications, notamment lorsque les contraintes relatives à un projet impliquent le choix de composants ECL. L'invention propose donc un procédé permettant la transmission simultanée de deux signaux binaires hétérochrones sous forme d'un signal binaire unique par l'intermédiaire d'un même support physique, le second signal étant supposé cadencé par une horloge, dite de bit, dont la période est supérieure à la durée minimale admise pour un bit de premier signal.

Selon une caractéristique de l'invention, pour constituer le signal binaire unique qui est transmis, il est prévu d'insérer, entre les transitions de changement de niveau binaire du premier des deux signaux binaires incidents, une brève impulsion d'inversion de niveau binaire pour chacun des bits du second signal incident qui correspondent à un même des deux niveaux binaires possibles pour ce second signal, chaque impulsion, dite d'inversion temporaire de polarité, due au second signal étant positionnée au delà d'une zone de garde s'étendant de part et d'autre des transitions de changement de niveau binaire du premier signal.

Dans la présente description, on utilisera l'expression "inversion de polarité" pour désigner les inversions de niveau binaire du signal transmis qui sont occasionnées par le second signal, afin de les différencier des inversions de niveau binaire qui sont dues au seul premier signal.

L'invention propose aussi un dispositif codeur pour unité émettrice mettant en oeuvre le procédé selon l'invention.

Selon une caractéristique de l'invention, ce dispositif codeur comporte :

- un ensemble de deux circuits retardateurs ayant même constante de temps qui sont en série, le premier de ces circuits retardateurs recevant le premier signal binaire incident à transmettre, le signal de sortie du second circuit retardateur étant retardé par rapport au premier signal incident d'un temps correspondant au temps de garde,
- un circuit mémoire recevant le second signal binaire incident à transmettre,
- un premier circuit logique recevant le premier signal incident et le signal de sortie du second circuit retardateur et fournissant un signal d'autorisation d'inversion de polarité,
- un second circuit logique recevant le signal d'autorisation d'inversion de polarité et un signal de demande d'insertion d'une impulsion d'inversion de polarité qui est fourni par le circuit mémoire sous l'action du second signal binaire incident pour chacun des bits d'une même valeur binaire fixée de ce signal,
- un circuit monostable, dont la constante de temps est égale à la durée choisie pour les impulsions d'inversion temporaire de polarité appliquées au signal transmis, ce circuit étant connecté en sortie du second circuit logique qui le déclenche dès qu'une demande d'insertion et une autorisation d'inversion sont simultanément présentes au niveau du second circuit logique,
- un troisième circuit logique recevant d'une part le premier signal incident avec un retard du au premier circuit retardateur et d'autre part le signal d'inversion de polarité de ce premier signal incident que fournit le circuit monostable lorsqu'il est déclenché, ce troisième circuit logique fournissant le signal à transmettre qui est obtenu soit directement du premier signal incident, soit par inversion temporaire de la polarité de ce signal lorsque le circuit monostable a été déclenché et ce pour une durée égale à la constante de ce circuit.

L'invention propose aussi un dispositif décodeur pour unité réceptrice mettant en oeuvre le procédé selon l'invention.

Selon une caractéristique de l'invention, ce dispositif décodeur comporte :

- un ensemble de deux circuits retardateurs qui ont des constantes de temps de même ordre et qui sont en série, le premier de ces circuits retardateurs recevant le signal binaire transmis,
- une première logique fournissant un signal correspondant au premier signal incident par manipulation logique du signal transmis et des deux signaux respectivement retardés par les deux circuits retardateurs dudit dispositif décodeur,
- une seconde logique fournissant un signal correspondant au second signal incident par combinaison logique, du premier signal reconstitué avec le second signal retardé.

L'invention, ses caractéristiques et ses avantages sont précisés dans la description qui suit en liaison avec les figures évoquées ci-dessous.

Les figures 1 et 2 présentent chacune un diagramme des temps représentatif d'un exemple de mise en oeuvre du procédé selon l'invention, l'une par une unité émettrice et l'autre par une unité réceptrice.

La figure 3 présente un schéma synoptique d'un dispositif codeur pour unité émettrice mettant en oeuvre le procédé selon l'invention.

La figure 4 présente un schéma synoptique d'un dispositif décodeur pour unité réceptrice mettant en oeuvre le procédé selon l'invention.

Comme déjà indiqué, le procédé selon l'invention est destiné à permettre la transmission simultanée de deux signaux binaires A et B supposés hétérochrones.

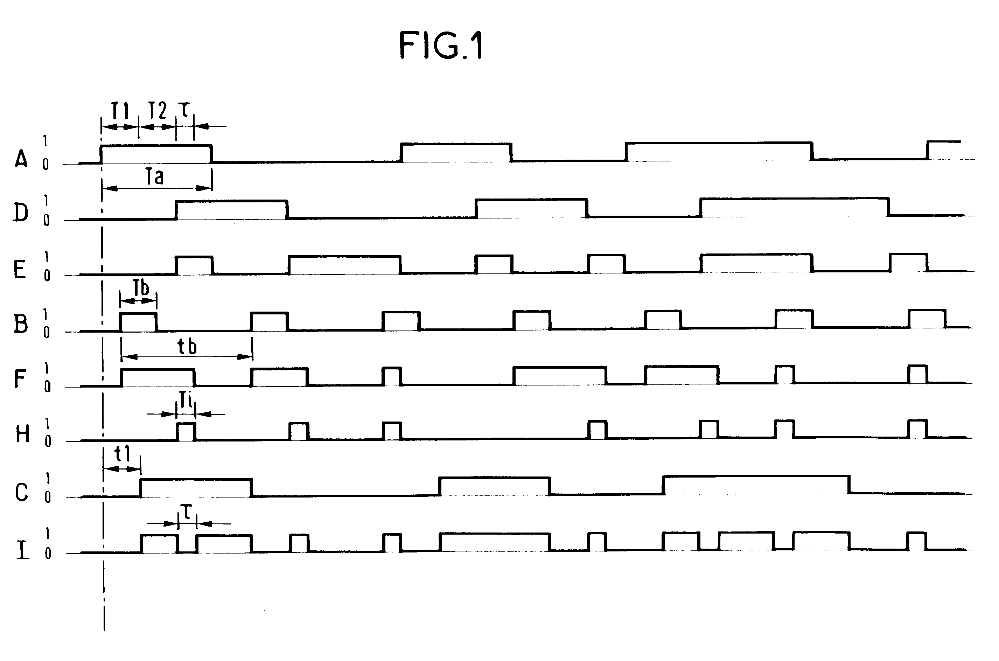

Le signal binaire incident A - voir figure 1 - peut être un signal de format et de débit quelconques, il est prévu qu'il soit transmis de façon transparente, sans apport de gigue et en respectant les rapports cycliques initiaux. Bien entendu, il y a nécessairement des limites que le signal A doit respecter, notamment en relation avec le débit maximal DI admissible par le support physique de transmission considéré.

Si l'on appelle Da le débit maximal de transmission pour le signal A, ce débit maximal doit être inférieur au débit maximal DI si l'on veut transmettre des bits d'un autre signal binaire, tel que B, parmi les bits propres au signal A.

Ce second signal binaire incident B est un signal dont la fréquence et la récurrence sont susceptibles de varier dans de larges plages, il doit cependant ne pas dépasser certaines limites en particulier en matière de débit.

Celui-ci qui doit nécessairement être inférieur au débit maximal DI permis par le support, est également dépendant du débit admis pour le signal incident A.

Dans un exemple de mise en oeuvre de l'invention, le débit maximal Da admis pour le signal incident A est de l'ordre de 10 Mbit/s alors que le débit maximal Db prévu pour le signal incident B est de 2 Mbit/s, ces valeurs étant données à titre d'exemple et ne devant pas être considérées comme des limites incontournables.

Selon l'invention, il est prévu d'exploiter les intervalles de temps entre transitions de changement de niveau binaire, d'un des signaux incidents, ici le signal incident A, pour y introduire de brèves inversions de niveau binaire, dites ici inversions de polarité, qui sont représentatives du signal incident B.

Dans une forme préférée de réalisation, seules sont directement prises en compte les portions de signal incident B qui correspondent à l'un des deux niveaux binaires possibles pour ce signal, chacune de ces portions étant comprise entre deux transitions de changement de niveau binaire du signal B.

Dans l'exemple présenté, ce sont les bits que forment les courtes portions de signal incident B ayant même valeur binaire "un" qui sont pris en compte, comme l'illustre la figure 1.

Chacun de ces bits de valeur binaire un du signal incident B est individuellement traduit, dans le signal I transmis, par une inversion temporaire de polarité de durée Ti qui change brièvement le niveau binaire autrement imposé à ce signal I par le signal incident A et qui correspond en pratique à une impulsion plus brève que celles dues au signal incident A seul.

Chaque impulsion d'inversion temporaire de polarité due à l'action du signal B vient s'insérer entre deux transitions de changement de niveau binaire dues au signal A; plusieurs impulsions d'inversion temporaire de polarité peuvent éventuellement être introduites, dans le signal I transmis, entre deux transitions dues à des changements successifs de niveau binaire du signal incident A, si les constitutions respectives des signaux incidents A et B le permettent.

Pour des raisons de reconstitution des signaux A et B à partir du signal I qui les a transmis, il est nécessaire que les actions ayant permis d'obtenir ce signal I, transmis, permettent de conserver au moins une caractéristique distinctive de l'un et/ou de l'autre.

Il est donc supposé ici que le signal incident B - voir figure 1 - est un signal binaire, qui est cadencé par une horloge de fréquence déterminée, disponible tant au niveau émission qu'au niveau réception, éventuellement après reconstitution à ce dernier niveau.

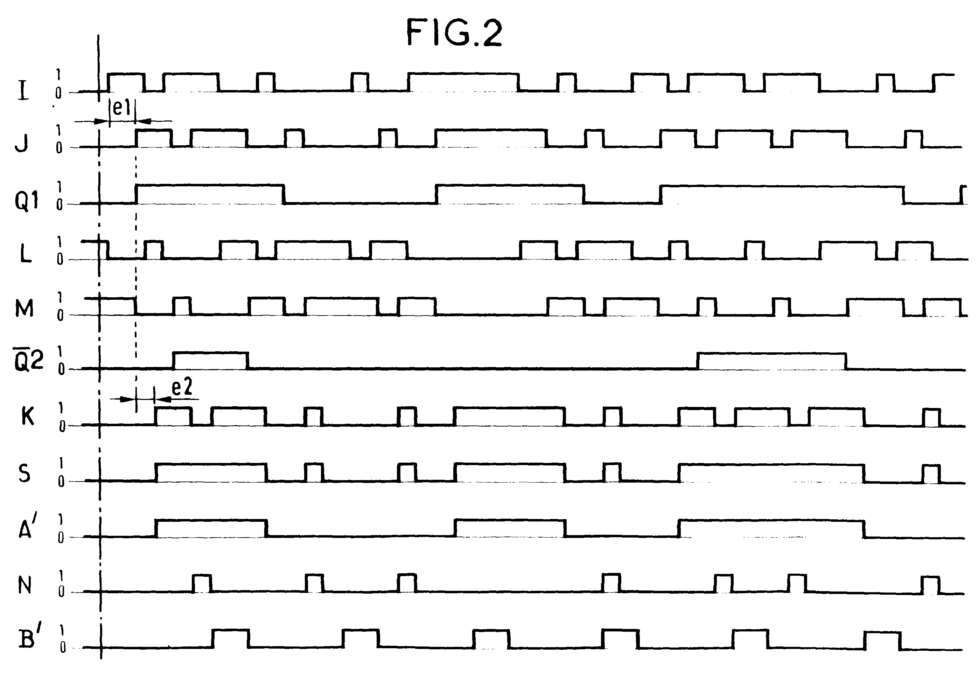

Pour des raisons liées au débit, l'impulsion d'inversion temporaire de polarité destinée à traduire chaque bit, ici de valeur un et de durée Tb, de signal incident B codé, est préférablement choisie de courte durée. Toutefois la durée Ti d'une impulsion d'inversion temporaire de polarité du signal I transmis, ne peut être inférieure à la valeur minimale $\tau$ admise pour qu'une impulsion soit transmissible par le support de transmission choisi. Dans l'exemple proposé en liaison avec les figures et notamment avec les diagrammes des figures 1 et 2, la valeur Ti est choisie égale à $\tau$.

Pour éviter la confusion en réception d'une transition du signal I transmis correspondant à un changement de valeur binaire du signal incident A avec une transition de ce signal I correspondant à un des flancs d'une impulsion d'inversion temporaire de polarité de durée Ti due à l'action du signal incident B, il est prévu d'empêcher toute inversion temporaire de polarité, dans le signal I destiné à être transmis, trop près d'une transition de changement de niveau, due au signal A.

A cet effet, un temps de garde est réservé de part et d'autre des transitions de changement de valeur binaire du signal incident A. Ce temps de garde entraîne un retard d'insertion, dans le signal I transmis, pour toute impulsion d'inversion temporaire de polarité due à l'action du signal B, qui devrait être prise en compte pendant ce temps de garde et qui ne sera donc insérée qu'après.

Dans une forme préférée de réalisation, le temps de garde dont la valeur minimale est supérieure au double de Ti est préférablement considéré composé de deux temps élémentaires t1 et t2, l'un et l'autre égaux à deux fois la valeur de Ti.

Ceci conduit donc à ce que les valeurs minimales respectivement admises pour la durée Ta d'une impulsion de signal incident A et pour la durée minimale tb entre deux occurrences successives de bits du signal incident B qui soient telles que l'on ait par exemple les relations :

$$Ta \geq t1 + t2 + \tau + \varepsilon \text{ et } tb \geq Ta + \varepsilon$$

$\varepsilon$ étant le laps de temps minimal du à la propagation des signaux et au prépositionnement des circuits impliqués dans la transmission.

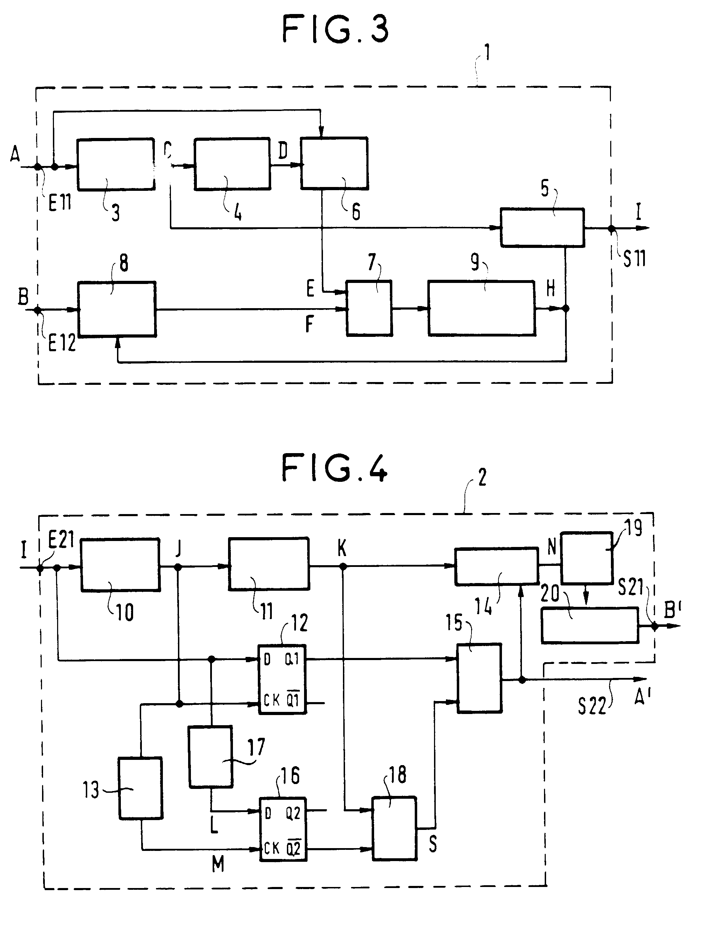

Selon l'invention, le procédé de transmission est susceptible d'être mis en oeuvre par l'intermédiaire d'un dispositif codeur d'émission qui est référencé 1 en figure 3 et d'un dispositif décodeur complémentaire de réception qui est référencé 2 en figure 4.

Le dispositif codeur 1 présenté qui est destiné à équiper une unité émettrice non représentée, comporte deux entrées E11 et E12 par l'intermédiaire desquelles les signaux binaires incidents A et B sont respectivement reçus.et une sortie S11 pour le signal I destiné à être transmis au dispositif de décodeur 2 par l'intermédiaire du support de transmission choisi qui, non représenté, est par exemple un support de type fibre optique.

Deux circuits retardateurs 3 et 4 sont insérés en série en aval de l'entrée E1 dans le dispositif codeur 1, le circuit retardateur 3 transmet le signal incident A avec un retard égal à t1, tel que défini ci-dessus, d'une part au circuit retardateur 4 et d'autre part à une première entrée d'un circuit logique 5, de type OU exclusif, le signal C fourni à ces deux circuits 4 et 5 étant aussi présenté sur l'exemple donné en figure 1.

Le circuit retardateur 4 transmet le signal C, qu'il a reçu, à une première entrée d'un circuit logique 6, de type OU exclusif complémenté, et ce avec un retard égal à t2 tel que défini ci-dessus. Une seconde entrée du circuit logique 6 est reliée à l'entrée E11 du dispositif codeur dont elle reçoit le signal incident A. Le signal D que fournit le circuit retardateur 4 est retardé d'une valeur t1 + t2 par rapport au signal A et en conséquence le signal E fourni par le circuit logique 6 est un signal d'autorisation qui définit les plages de temps, ici de niveau binaire 1, durant lesquelles est possible l'insertion dans le signal à transmettre d'une impulsion correspondant à une inversion temporaire de polarité causée par le signal incident B, ainsi qu'à contrario celles des plages où une telle insertion est interdite.

Le signal E est transmis à une première entrée d'un circuit logique 7, de type ET, qui est relié par une seconde de ses entrées à la sortie d'un circuit mémoire 8 recevant le signal incident B de l'entrée E12.

Le circuit mémoire 8 fournit en sortie un signal F destiné à susciter un bref changement de valeur binaire dans le signal I transmis, cette valeur binaire étant autrement dépendante de celle du signal incident A. Comme indiqué plus haut, dans l'exemple envisagé, ce sont les fronts montants des impulsions, de valeur binaire un, du signal incident B qui commandent le passage au niveau binaire un du signal F, ce niveau étant maintenu par le circuit mémoire 8 jusqu'à apparition d'un front descendant du signal H en sortie d'un circuit monostable 9 relié en sortie du circuit logique 7.

Le circuit monostable 9 est déclenché dès que, en entrée du circuit logique 7, le signal F a un niveau binaire, ici de valeur un, qui correspond à une demande d'insertion d'une impulsion d'inversion temporaire de polarité et que simultanément l'autorisation d'une telle insertion est transmise par le signal E, ici lui aussi de valeur un.

La constante de temps du circuit monostable 9 correspond à la valeur Ti définie ci-dessus, de telle sorte que le signal H fourni par ce circuit monostable et appliqué au circuit logique 5, se combine avec le signal C, correspondant au signal A retardé d'un temps t1, pour que la valeur binaire du signal I résultant soit inversée pour un temps Tb, par rapport à celle que lui commande le signal C. Dans le diagramme proposé en figure 1, chaque inversion déclenchée par une impulsion de valeur binaire un du signal H en sortie du circuit monostable 9, se traduit par une impulsion de durée Ti qui inverse, pendant cette durée Ti, la valeur du signal I par rapport au signal C et qui supprime par son front descendant la demande d'inversion induite par le circuit mémoire 8, via le signal F.

Le dispositif décodeur 2 présenté en figure 4 qui est destiné à équiper une unité réceptrice non représentée, comporte une entrée E21 par laquelle il reçoit le signal I via un support de transmission non représenté. Il comporte aussi deux sorties S21 et S22 respectivement destinées à fournir les signaux A et B reconstitués à partir du signal I.

Ce dernier est initialement appliqué à un circuit retardateur 10 relié à l'entrée E21 du dispositif, la constante de temps e1 de ce circuit retardateur est ici choisie de manière que la condition Ti < e1 < 2.Ti soit respectée. Le signal J obtenu en sortie du circuit retardateur 10, qui correspond donc au signal I retardé d'un temps e1 est appliqué à un second circuit retardateur 11 ayant une constante de temps e2, telle que Ti < e2 < 2.Ti, à une entrée d'horloge Ck d'une bascule 12, de type D, et à un inverseur logique 13.

Le signal K en sortie du circuit retardateur 11 qui correspond au signal I successivement retardé d'un temps e1 et d'un temps e2 est appliqué à un circuit logique 14, de type OU exclusif.

La bascule 12 est reliée à l'entrée E21 du dispositif décodeur 2 et reçoit donc le signal I sur son entrée de données D, elle produit donc un signal binaire direct Q1 qui correspond à la valeur binaire du signal déterminée à chacun des fronts montants du signal J, ce signal Q1 est appliqué à une première entrée d'un circuit logique 15, de type ET.

L'inverseur logique 13 attaque l'entrée d'horloge Ck d'une bascule 16, de type D, qui est reliée à l'entrée E21 par un inverseur logique 17. Cette bascule 16 attaque par sa sortie complémentée $\overline{Q}2$ une première entrée d'un circuit logique 18, de type OU, qui reçoit le signal de sortie K du second circuit retardateur 11 sur sa seconde entrée. L'opération logique $K.\overline{Q}2$ réalisée par le circuit logique 18 permet d'éliminer du signal K les inversions temporaires de polarité de valeur binaire zéro qui, dues à l'interaction du signal incident B sur le signal incident A, sont présentes dans les signaux I et K.

Le signal de sortie S du circuit logique 18 est appliqué à une seconde entrée du circuit logique 15 qui reçoit le signal Q1, l'opération logique S.Q1 réalisée par le circuit logique 15 permet d'éliminer les inversions temporaires de polarité de valeur binaire un, dues à l'action du signal incident B sur le signal incident A, que contient le signal S. Le signal de sortie A' de ce circuit logique 15 correspond donc à une reconstitution du signal incident A au niveau du dispositif décodeur 2 et il est transmis à ce titre à la sortie S22 de ce dispositif décodeur.

Le signal A' est également appliqué à une seconde entrée du circuit logique 14, de type OU exclusif, qui reçoit le signal K par une première entrée.

L'opération logique K⊕A' réalisée par le circuit logique 14 permet de reconstituer le signal H produit au cours du codage d'une part en conservant les portions de signal de niveau binaire un qui ne se trouvent que dans le signal K et pas dans le signal A' et qui en conséquence ne peuvent correspondre à des portions de signal de niveau binaire un uniquement dues au signal incident A, d'autre part en inversant les portions de signal de niveau binaire zéro du signal K qui correspondent temporellement à un niveau binaire un du signal A' et par conséquent à des inversions temporaires de polarité dues à l'action du signal incident B sur le signal incident A.

Le signal de sortie N ainsi obtenu en sortie du circuit logique 14 qui correspond approximativement à une reconstitution du signal H, est ici appliqué à un circuit de mise en forme 19 permettant de transformer, si besoin est, les portions de signal, ici de valeur binaire un, de ce signal N en impulsions de valeur binaire un ayant les caractéristiques de durée et d'amplitude prévues pour les impulsions correspondantes du signal incident B.

Le signal de sortie du circuit de mise en forme 19 est appliqué en entrée d'un circuit de remise en phase 20 contrôlé par les signaux d'horloge ayant servis au codage au niveau de l'unité émettrice, ces signaux étant transmis ou reconstitués au niveau de l'unité réceptrice d'une manière quelconque connue qui ne sera pas décrite ici, dans la mesure où elle n'entre pas dans le cadre de l'invention.

Le signal B' apparaissant en sortie du circuit de remise en phase correspond donc à une reconstitution du signal incident B au niveau du dispositif décodeur 2 et il est transmis à ce titre à la sortie S21 de ce dernier.

## Revendications

1. Procédé pour la transmission simultanée de deux signaux binaires hétérochrones (A, B) sous forme d'un signal binaire unique (I) par l'intermédiaire d'un même support physique, le second (B) desdits signaux binaires étant supposé cadencé par une horloge, dite de bit, dont la période est supérieure à la durée minimale admise pour un bit de premier signal (A), caractérisé en ce que pour constituer ce signal binaire unique transmis (I), il est prévu d'insérer, entre les transitions de changement de niveau binaire du premier (A) des deux signaux binaires incidents, une brève impulsion d'inversion de niveau binaire pour chacun des bits du second signal incident (B) qui correspondent à un même des deux niveaux binaires possibles pour ce second signal, chaque impulsion, dite d'inversion temporaire de polarité, due au second signal étant positionnée au delà d'une zone de garde s'étendant de part et d'autre des transitions de changement de niveau binaire du premier signal.

2. Procédé, selon la revendication 1, caractérisé en ce qu'il comporte une phase de codage pour la constitution du signal unique à transmettre (I) à partir des deux signaux incidents (A, B) qui comporte les opérations suivantes:

   - obtention d'un signal d'autorisation définissant les plages de temps du premier signal incident pendant lesquelles une inversion de polarité due au second signal incident est possible, par combinaison logique du premier signal incident (A) avec un signal (D) obtenu en retardant ce premier signal incident d'un temps égal au temps de garde (t1+t2),
   - obtention d'un signal de demande d'insertion d'une impulsion d'inversion temporaire de polarité à partir d'une impulsion de valeur binaire fixée du second signal incident,
   - déclenchement d'une inversion de polarité du signal transmis (I), qui correspond autrement au premier signal incident (A) retardé d'un temps correspondant à la moitié du temps de garde, dès qu'il y a présence simultanée du signal de demande d'insertion et du signal d'autorisation, l'impulsion d'inversion temporaire de polarité obtenue ayant une durée déterminée (Ti) fixe, au moins égale à la durée minimale τ admissible pour qu'une impulsion soit transmissible par le support de transmission choisi.

3. Procédé, selon les revendications 1 et 2, caractérisé en ce qu'il comporte une phase de décodage, à la réception pour la reconstitution des signaux incidents (A, B) à partir d'un signal transmis (I), qui comporte les opérations suivantes:

- reconstitution (A') du premier signal incident (A) par élimination successive des impulsions d'inversion de polarité du signal transmis (I) qui sont dues au second signal incident (B) et qui ont d'abord une première valeur binaire, puis ensuite de celles qui ont la seconde valeur binaire possible, cette élimination des unes et des autres étant réalisée par manipulation logique du signal transmis (I) avec un premier signal (J) obtenu en retardant le signal transmis d'un premier temps (e1) et avec un second signal (K) obtenu en retardant ce premier signal (J) d'un second temps (e2),
- reconstitution (B') du second signal incident (B) par combinaison logique, de type OU exclusive, du premier signal reconstitué (A') avec le second signal retardé (K) de manière à obtenir un signal (N) composé d'impulsions correspondant aux seules impulsions d'inversion de polarité dues à l'action du second signal incident sur le premier signal incident.

4. Dispositif codeur pour unité émettrice mettant en oeuvre le procédé selon la revendication 2, caractérisé en ce qu'il comporte:

- un ensemble de deux circuits retardateurs (3, 4) ayant même constante de temps qui sont en série, le premier de ces circuits retardateurs recevant le premier signal binaire incident (A) à transmettre, le signal de sortie (D) du second circuit retardateur étant retardé par rapport au premier signal incident d'un temps correspondant au temps de garde (t1+t2),
- un circuit mémoire 8 recevant le second signal binaire incident (B) à transmettre,
- un premier circuit logique (6) recevant le premier signal incident et le signal de sortie du second circuit retardateur et fournissant un signal (E) d'autorisation d'inversion de polarité,
- un second circuit logique (7) recevant le signal (E) d'autorisation d'inversion de polarité et un signal (F) de demande d'insertion d'une impulsion d'inversion temporaire de polarité qui est fourni par le circuit mémoire sous l'action du second signal binaire incident (B) pour chacune des impulsions d'une valeur binaire fixée de ce signal,

- un circuit monostable (9), dont la constante de temps est égale à la durée (Ti) choisie pour les impulsions d'inversion temporaire de polarité appliquées au signal transmis, ce circuit étant connecté en sortie du second circuit logique (7) qui le déclenche dès qu'une demande d'insertion et une autorisation d'inversion sont simultanément présentes au niveau du second circuit logique,
- un troisième circuit logique (5) recevant d'une part le premier signal incident avec un retard du au premier circuit retardateur et d'autre part le signal d'inversion de polarité de ce premier signal incident que fournit le circuit monostable lorsqu'il est déclenché, ce troisième circuit logique fournissant le signal (I) à transmettre qui est obtenu soit directement du premier signal incident, soit par inversion temporaire de la polarité de ce signal lorsque le circuit monostable a été déclenché et ce pour une durée égale à la constante de ce circuit.

5. Dispositif décodeur pour unité réceptrice mettant en oeuvre le procédé selon la revendication 3, caractérisé en ce qu'il comporte:

- un ensemble de deux circuits retardateurs (10,11) qui ont des constantes de temps de même ordre et qui sont en série, le premier (10) de ces circuits retardateurs recevant le signal binaire (I) transmis,
- une première logique (11,12,13,15,16,17,18) fournissant un signal (A') correspondant au premier signal incident (A) par manipulation logique du signal transmis (I) et des deux signaux (J) et (K) respectivement retardés par les deux circuits retardateurs (10,11) dudit dispositif décodeur (2),
- une seconde logique (14,19,20) fournissant un signal (B') correspondant au second signal incident (B) par combinaison logique, du premier signal reconstitué (A') avec le second signal retardé (K).

**Patentansprüche**

1. Verfahren zur simultanen Übertragung von zwei binären heterochronen Signalen (A, B) in Form eines einzigen binären Signals (I) über einen gleichen physischen Träger, wobei das zweite (B) der binären Signale als durch einen sogenannten Bit-Takt getaktet angenommen wird, dessen Periode größer als die für ein Bit des ersten Signals (A) minimale zugelassene Dauer ist, dadurch gekennzeichnet, daß zum Erzeugen dieses übertragenen einzigen binären Signals (I) vorgesehen ist, zwischen den Übergängen mit Binärniveauänderung des ersten (A) der zwei ankommenden binären Signale einen kurzen Binärniveau-Umkehrimpuls für jedes der Bits des zweiten ankommenden Signals (B) einzufügen, die einem gleichen der zwei möglichen binären Niveaus für dieses zweite Signal entsprechen, wobei jeder durch das zweite Signal verursachte Impuls, als zeitweiliger Polaritätsumkehrimpuls bezeichnet, jenseits einer Wartezone positioniert ist, die sich beiderseits der Übergänge mit Binärniveauänderung des ersten Signals erstreckt.

2. Verfahren nach Anspruch 1, dadurch gekennzeichnet, daß es eine Codierphase zur Erzeugung des zu übertragenden einzigen Signals (I) aus den zwei ankommenden Signalen (A, B) umfaßt, die folgende Operationen umfaßt:

- Gewinnen eines Zulassungssignals, das die Zeitbereiche des ersten ankommenden Signals definiert, während derer eine durch das zweite ankommende Signal verursachte Polaritätsumkehr möglich ist, durch logische Kombination des ersten ankommenden Signals (A) mit einem durch Verzögern dieses ersten ankommenden Signals um eine Zeit gleich der Wartezeit (t1 + t2) erhaltenen Signal (D),

- Gewinnen eines Signals der Anforderung der Einfügung eines zeitweiligen Polaritätsumkehrimpulses aus einem Impuls mit festgelegtem Binärwert des zweiten ankommenden Signals,

- Auslösen einer Polaritätsumkehr des übertragenen Signals (I), das ansonsten dem um eine der halben Wartezeit entsprechende Zeit verzögerten ankommenden Signal (A) entspricht, sobald das Signal der Anforderung der Einfügung und das Zulassungssignal simultan vorliegen, wobei der zeitweilige Polaritätsumkehrimpuls eine feste vorgegebene Dauer (Ti) wenigstens gleich derjenigen Dauer τ hat, die minimal zulässig ist, damit ein Impuls auf dem gewählten Übertragungsträger übertragbar ist.

3. Verfahren nach Ansprüchen 1 und 2, dadurch gekennzeichnet, daß es eine Decodierphase am Empfang für die Wiederherstellung der ankommenden Signale (A, B) aus einem übertragenen Signal (I) umfaßt, welches folgende Operationen umfaßt:

- Wiederherstellen (A') des ersten ankommenden Signals (A) durch sukzessive Beseitigung der Polaritätsumkehrimpulse des übertragenen Signals (I), die durch das zweite ankommende Signal (B) verursacht sind und die zunächst einen ersten Binärwert haben, dann derjenigen, die den zweiten möglichen Binärwert haben, wobei die Beseitigung der einen und der anderen durch logische Manipulation des übertragenen Signals (I) mit einem ersten, durch Verzögern des übertragenen Signals um eine erste Zeit (e1) erhaltenen Signal (J) und mit einem zweiten, durch Verzögern dieses ersten Signals (J) um eine zweite Zeit (e2) erhaltenen Signal (K) durchgeführt wird,

- Wiederherstellen (B') des zweiten ankommenden Signals (B) durch logische Kombination vom Typ EXCLUSIV-ODER des ersten wiederhergestellten Signals (A') mit dem zweiten verzögerten Signal (K), um ein Signal (N) zu erhalten, das aus Impulsen zusammengesetzt ist, die allein den durch die Wirkung des zweiten ankommenden Signals auf das erste ankommende Signal verursachten Polaritätsumkehrimpulsen entsprechen.

4. Codiervorrichtung für eine Sendereinheit, die das Verfahren nach Anspruch 2 anwendet, dadurch gekennzeichnet, daß sie umfaßt:

- eine Anordnung von zwei Verzögerungsschaltungen (3, 4), die gleiche Zeitkonstante haben und in Reihe sind, wobei die erste dieser Verzögerungsschaltungen das zu übertragende erstere ankommende Binärsignal (A) empfängt, das Ausgangssignal (D) der zweiten Verzögerungsschaltung in Bezug auf das erste ankommende Signal um eine Zeit verzögert ist, die der Wartezeit (t1 + t2) entspricht,

- eine Speicherschaltung 8, die das zu übertragende zweite ankommende Binärsignal (B) empfängt,

- eine erste Logikschaltung (6), die das erste ankommende Signal und das Ausgangssignal der zweiten Verzögerungsschaltung empfängt und ein Polaritätsumkehr-Zulassungssignal (E) liefert,

- eine zweite Logikschaltung (7), die das Polaritätsumkehr-Zulassungssignal (E) und ein Signal (F) der Anforderung des Einfügens eines zeitweiligen Polaritätsumkehrimpulses empfängt, das von der Speicherschaltung unter der Wirkung des zweiten ankommenden Signals (B) für jeden der Impulse mit festgelegtem Binärwert dieses Signals geliefert wird,

- eine monostabile Schaltung (9), deren Zeitkonstante gleich der für die auf das übertragene Signal angewendeten zeitweiligen Polaritätsumkehrimpulse gewählten Dauer (Ti) ist, wobei diese Schaltung an den Ausgang der zweiten Logikschaltung (7) angeschlossen ist, die sie auslöst, sobald eine Anforderung einer Einfügung und eine Umkehr-Zulassung simultan an der zweiten Logikschaltung vorhanden sind,

- eine dritte Logikschaltung (5), die einerseits das erste ankommende Signal mit einer durch die erste Verzögerungsschaltung verursachten Verzögerung und andererseits das Polaritätsumkehrsignal dieses ersten ankommenden Signals empfängt, welches die monostabile Schaltung liefert, wenn sie ausgelöst wird, wobei diese dritte Logikschaltung das zu übertragende Signal (I) liefert, das entweder direkt vom ersten ankommenden Signal oder durch zeitweilige Polaritätsumkehr dieses Signals erhalten wird, wenn die monostabile Schaltung ausgelöst worden ist, und zwar für eine Dauer gleich der Konstanten dieser Schaltung.

5. Decodiervorrichtung für eine Empfängereinheit, die das Verfahren nach Anspruch 3 anwendet, dadurch gekennzeichnet, daß sie umfaßt:

- eine Anordnung von zwei Verzögerungsschaltung (10, 11), die Zeitkonstanten der gleichen Ordnung haben und in Reihe sind, wobei die erste (10) dieser Verzögerungsschaltungen das übertragene Binärsignal (I) empfängt,

- eine erste Logik (11, 12, 13, 15, 16, 17, 18), die ein dem ersten ankommenden Signal (A) entsprechendes Signal (A') durch logische Manipulation des übertragenen Signals (I) und der zwei jeweils durch die Verzögerungsschaltungen (10, 11) der Decodiervorrichtung (2) verzögerten Signale (J) und (K) liefert,

- eine zweite Logik (14, 19, 20), die ein dem zweiten ankommenden Signal (B) entsprechendes Signal (B') durch logische Kombination des wiederhergestellten ersten Signals (A') mit dem zweiten verzögerten Signal (K) liefert.

## Claims

1. Method for simultaneous transmission of two heterochronous binary signals (A, B) in the form of a single binary signal (I) on a common physical medium, the second (B) of said binary signals being timed by a bit clock whose bit period is greater than the minimal duration allowed for a bit of the first signal (A), characterised in that for constituting the single binary signal (I) transmitted there is provision for inserting between transitions of the first binary input signal (A) a brief binary level inverting pulse for each bit of the second input signal (B) which corresponds to the same one of the two possible binary levels of the second signal, each temporary polarity inversion pulse due to the second signal being placed outside a guard area on either side of transitions of the first signal.

2. Method according to claim 1 characterised in that it comprises an encoding phase to constitute the single signal (I) to be transmitted from the two input signals (A, B) comprising the following operations:

- obtaining an enabling signal defining the time periods of the first input signal during which polarity inversion due to the second input signal is possible by logical combination of the first input signal (A) with a signal (D) obtained by delaying the first signal by a time equal to a guard time (t1 + t2),

- obtaining from a pulse of fixed binary value of the second input signal a signal requesting insertion of a temporary polarity inversion pulse, and

- triggering a polarity inversion of the transmitted signal (I) which otherwise corresponds to the first input signal (A) delayed by a time corresponding to half the guard time as soon as the insertion request signal and the enabling signal are present simultaneously, the temporary polarity inversion pulse obtained having a fixed duration (Ti) at least equal to a minimal duration allowed for a pulse to be transmitted by the transmission medium.

3. Method according to claim 1 and claim 2 characterised in that it comprises a decoding phase effected at the receiving end to reconstitute the input signals (A, B) from a transmitted signal (I) comprising the following operations:

- reconstituting (A') the first input signal (A) by successive elimination of polarity inversion pulses from the transmitted signal (I) which are due to the second input signal (B), firstly those which have a first binary value and then those which have the second binary value, this elimination of both being effected by logical processing of the transmitted signal (I) using a first signal (J) obtained by delaying the transmitted signal by a first time (el) and a second signal (K) obtained by delaying the first signal (J) by a second time (e2), and

- reconstituting (B') the second input signal (B) by applying the exclusive-OR logical operator to the reconstituted first signal (A') and the delayed second signal (K) so as to obtain a signal (N) made up of pulses corresponding only to polarity inversion pulses due to the action of the second input signal on the first input signal.

4. Encoder device for use in a send unit employing a transmission method according to claim 2 characterised in that it comprises:

- a set of two time-delay circuits (3, 4) in series having the same period, the first time-delay circuit receiving the first binary input signal (A) to be transmitted, the output signal (D) of the second time-delay circuit being delayed relative to the first input signal by a time corresponding to the guard time (t1+t2),

- a memory 8 receiving the second binary input signal (B) to be transmitted,

- a first logic circuit (6) receiving the first input signal and the output signal of the second time-delay circuit and supplying a polarity inversion enabling signal (E),

- a second logic circuit (7) receiving the polarity inversion enabling signal (E) and a signal (F) requesting insertion of a temporary polarity inversion pulse supplied by the memory due to the action of the second binary input (B) signal for each of the pulses of a fixed binary value of this signal,

- a monostable (9) whose period is equal to the duration (Ti) selected for the temporary polarity inversion pulses applied to the transmitted signal, the monostable being connected to the output of the second logic circuit (7) which triggers it as soon as an insertion request and an inversion enabling signal are simultaneously present at the second logic circuit, and

- a third logic circuit (5) receiving the first input signal with a time-delay due to the first time-delay circuit and the signal for inverting the polarity of the first input signal supplied by the monostable when triggered, the third logic circuit supplying the signal (I) to be transmitted which is obtained either directly from the first input signal or by temporary inversion of the polarity of this signal when the monostable has been triggered for a time equal to the period of the monostable.

5. Decoder device for a receive unit using a transmission method according to claim 3 characterised in that it comprises:

- a set of two time-delay circuits (10, 11) which have periods of the same order of magnitude and which are connected in series, the first time-delay circuit (10) receiving the binary (I) signal transmitted,

- a first logic circuit (11, 12, 13, 15, 16, 17, 18) supplying a signal (A') corresponding to the first input signal (A) by logical manipulation of the transmitted signal (I) and two signals (J, K) respectively delayed by the two time-delay circuits (10, 11) said decoder (2), and

- a second logic circuit (14, 19, 20) supplying a signal (B') corresponding to the second input signal (B) by logical combination of the reconstituted first signal (A') and the delayed second signal (K).

# FIG.1

EP 0 588 701 B1

EP 0 588 701 B1

# FIG.2

# FIG.3

# FIG.4